(19) Europäisches Patentamt
European Patent Office
Office européen des brevets

(11) EP 3 188 289 A1

(12) EUROPEAN PATENT APPLICATION
published in accordance with Art. 153(4) EPC

(43) Date of publication:
**05.07.2017 Bulletin 2017/27**

(21) Application number: **15836238.4**

(22) Date of filing: **24.08.2015**

(51) Int Cl.:
***H01M 4/14*** *(2006.01)* ***H01M 4/62*** *(2006.01)*

(86) International application number:
**PCT/JP2015/073723**

(87) International publication number:
**WO 2016/031772 (03.03.2016 Gazette 2016/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **27.08.2014 JP 2014172702**

(71) Applicant: **Hitachi Chemical Company, Ltd.**
**Chiyoda-ku**
**Tokyo 100-6606 (JP)**

(72) Inventors:
- **KOGURE Kouji**
  **Tokyo 100-6606 (JP)**
- **MINOURA Satoshi**
  **Tokyo 100-6606 (JP)**
- **SHIBAHARA Toshio**
  **Tokyo 100-6606 (JP)**
- **HARA Kousuke**
  **Tokyo 100-6606 (JP)**
- **UEDA Satoko**
  **Tokyo 100-6606 (JP)**
- **YAMASHITA Takeshi**
  **Tokyo 100-6606 (JP)**

(74) Representative: **Hoffmann Eitle**
**Patent- und Rechtsanwälte PartmbB**
**Arabellastraße 30**
**81925 München (DE)**

(54) **LEAD STORAGE BATTERY**

(57) A lead storage battery comprising a positive electrode and a negative electrode, wherein the negative electrode has a current collector, and a negative electrode material supported by the current collector; the negative electrode material comprises (A) a negative electrode active material, (B) a bisphenol-based resin having a structural unit derived from a reaction of (b1) a bisphenol-based compound, (b2) at least one selected from the group consisting of aminobenzenesulfonic acids and aminobenzenesulfonic acid derivatives, and (b3) at least one selected from the group consisting of formaldehyde and formaldehyde derivatives, and (C) a naphthalenesulfonic acid-based resin; and a specific surface area of the negative electrode material is 0.5 $m^2/g$ or more in a fully charged state.

EP 3 188 289 A1

## Description

### Technical Field

The present invention relates to a lead storage battery.

### Background Art

In recent years, for the automobile, various measures to improve fuel consumption have been investigated in order to prevent air pollution or global warming. As for the automobile in which the measures to improve the fuel consumption are taken, for example, a micro-hybrid vehicle, such as an vehicle with idling-stopping (idle reduction) system (hereinafter referred to as "ISS vehicle") which reduces an operation time of an engine and a power generation control vehicle which reduces the power generation of an alternator by a power of an engine, has been investigated.
In the ISS vehicle, the number of times of starting the engine increases, and accordingly a discharge of a large current of a lead storage battery is repeated. In addition, in the ISS vehicle and the power generation control vehicle, the electrical power output by the alternator is reduced, the lead storage battery is intermittently charged, and accordingly the charging becomes insufficient.
The lead storage battery which is used in the above described way results in being used in a partially charged state, which is referred to as PSOC (Partial State Of Charge). When the lead storage battery is used under the PSOC, the life becomes shorter than that in the case where the lead storage battery is used in a fully charged state.
Additionally, in Europe, the charge performance of the lead storage battery in charge and discharge cycles according to the control for the micro-hybrid vehicle, is considered to be important in recent years, and DCA (Dynamic Charge Acceptance) evaluation in such a manner is being standardized. In other words, the way of using the lead storage battery as in the above description has become regarded as important.
In contrast to this, the following Patent Literature 1 discloses, as means for improving the cycle life characteristics and the charge performance, the technique concerning a negative electrode for the lead storage battery, the negative electrode being obtained with the use of a negative electrode active material, and a condensate of phenols, an aminobenzenesulfonic acid and formaldehyde.

### Citation List

### Patent Literature

Patent Literature 1: International publication No. WO 1997/37393

### Summary of Invention

### Technical Problem

By the way, when the lead storage battery is not completely charged and is used in a state of insufficient charge, a stratification phenomenon occurs, in which phenomenon a difference in the concentration of dilute sulfuric acid as an electrolytic solution arises between an upper part and a lower part of an electrode (polar plate or the like) in the battery. This is because the complete charging is not performed, and accordingly the agitation of the electrolytic solution becomes insufficient. In this case, the concentration of dilute sulfuric acid becomes high in the lower part of the electrode, and therefore, the sulfation occurs. The sulfation is a phenomenon such that lead sulfate which is a discharge product resists being returned to a charged state. Therefore, when the sulfation occurs, only the upper part of the electrode becomes to react intensively. As a result, in the upper part of the electrode, a degradation progresses, for example, the connection between active materials becomes weak, and thus the active material exfoliates from the current collector, which leads to lowering of the battery performance and shortening of the life.
Because of this, it is required for the latest lead storage battery for the automobile to improve the cycle life characteristics in the case of being used under the PSOC.
The present invention has been made in view of the above described circumstances, and an object of the present invention is to provide a lead storage battery capable of obtaining the excellent cycle life characteristics (hereinafter referred to as "cycle characteristics").

### Solution to Problem

The present inventors have made an extensive investigation, and as a result, it has become clear that the

sufficient cycle characteristics are not obtained when the negative electrode for the lead storage battery described in Patent Literature 1 is used. In contrast to this, the present inventors have found out that the above described problems can be solved by using a lead storage battery comprising a negative electrode having a negative electrode material that comprises (A) a negative electrode active material, (B) a bisphenol-based resin having a structural unit derived from a reaction of (b1) a bisphenol-based compound, (b2) at least one selected from the group consisting of aminobenzenesulfonic acids and aminobenzenesulfonic acid derivatives, and (b3) at least one selected from the group consisting of formaldehyde and formaldehyde derivatives, and (C) a naphthalenesulfonic acid-based resin; and that has a specific surface area of 0.5 $m^2/g$ or more in a fully charged state.

Specifically, the lead storage battery of the present invention is a lead storage battery comprising a positive electrode and a negative electrode, wherein the negative electrode has a current collector and a negative electrode material supported by the current collector, wherein the negative electrode material comprises (A) a negative electrode active material, (B) a bisphenol-based resin having a structural unit derived from a reaction of (b1) a bisphenol-based compound, (b2) at least one selected from the group consisting of aminobenzenesulfonic acids and aminobenzenesulfonic acid derivatives, and (b3) at least one selected from the group consisting of formaldehyde and formaldehyde derivatives, and (C) a naphthalenesulfonic acid-based resin; and a specific surface area of the negative electrode material is 0.5 $m^2/g$ or more in a fully charged state.

According to the lead storage battery of the present invention, the excellent cycle characteristics can be obtained. In addition, it is possible to balance an excellent battery performance such as the cycle characteristics, discharge characteristics and charge acceptability according to the lead storage battery of the present invention.

The ratio of the content of the component (C) with respect to the content of the component (B) (component (C)/ component (B)) is preferably 0.01 to 0.5. In this case, the further excellent cycle characteristics can be obtained.

The weight average molecular weight of the component (B) is preferably 20000 to 70000. In this case, the further excellent cycle characteristics can be obtained.

The weight average molecular weight of the component (C) is preferably 1000 to 20000. In this case, the further excellent cycle characteristics can be obtained.

## Advantageous Effects of Invention

According to the present invention, the excellent cycle characteristics can be obtained in the lead storage battery. In addition, it is possible to balance an excellent battery performance such as the cycle characteristics, discharge characteristics and charge acceptability according to the present invention.

According to the present invention, it is possible to provide the lead storage battery that can be sufficiently satisfied in use for an ISS vehicle which is used in a severe environment. According to the present invention, it is possible to provide an application of the lead storage battery to the ISS vehicle.

## Brief Description of Drawings

[Figure 1] Figure 1 is a view showing a measurement result of $^1$H-NMR spectrum of a bisphenol-based resin.

[Figure 2] Figure 2 is a view showing a calibration curve in a measurement of a weight average molecular weight of a bisphenol-based resin.

## Description of Embodiments

Embodiments of the present invention will be described in detail below.

A lead storage battery of the present embodiment comprises a positive electrode and a negative electrode. The negative electrode has a current collector and a negative electrode material supported by the current collector. The negative electrode material comprises (A) a negative electrode active material (hereinafter occasionally referred to as "component (A)"), (B) a bisphenol-based resin (hereinafter occasionally referred to as "component (B)") having the structural unit derived from a reaction of (b1) a bisphenol-based compound (hereinafter occasionally referred to as "component (b1)"), (b2) at least one selected from the group consisting of aminobenzenesulfonic acids and aminobenzenesulfonic acid derivatives (hereinafter occasionally referred to as "component (b2)"), and (b3) at least one selected from the group consisting of formaldehyde and formaldehyde derivatives (hereinafter occasionally referred to as " component (b3)"), and (C) a naphthalenesulfonic acid-based resin (hereinafter occasionally referred to as "component (C)"). The component (B) is, for example, a bisphenol-based resin obtained by the reaction of the component (b1), the component (b2) and the component (b3).

The specific surface area of the negative electrode material in the fully charged state is 0.5 $m^2/g$ or more, in

view of improving the battery performance (cycle characteristics, discharge characteristics and charge acceptability). The specific surface area of the negative electrode material is preferably over 0.5 $m^2/g$, more preferably 0.6 $m^2/g$ or more, and further preferably 0.7 $m^2/g$ or more, in view of further improving the battery performance (cycle characteristics, discharge characteristics and charge acceptability). The specific surface area of the negative electrode material is preferably 1.2 $m^2/g$ or less, more preferably 1.0 $m^2/g$ or less, and further preferably 0.8 $m^2/g$ or less, in view of further improving the battery performance (cycle characteristics, discharge characteristics and charge acceptability). The specific surface area of the negative electrode material is preferably 0.5 to 1.2 $m^2/g$, more preferably over 0.5 $m^2/g$ and 1.2 $m^2/g$ or less, further preferably 0.6 to 1.0 $m^2/g$, and particularly preferably 0.6 to 0.8 $m^2/g$, in view of further improving the battery performance (cycle characteristics, discharge characteristics and charge acceptability).

For example, the above described specific surface area of the negative electrode material can be measured using the BET specific surface area meter HM-2201FS (made by Macsorb Co., Ltd.). The specific surface area of the negative electrode material is determined, for example, by sampling approximately 0.2 g of the negative electrode material in the central part of the negative electrode after formation, which is obtained by a method for producing a negative electrode described later, and using the BET specific surface area meter.

<Component (A): negative electrode active material>

Examples of the component (A) include a spongy lead. In order to set the specific surface area of the component (A) in the above described range, for example, the particle size of the lead powder of the raw material of the component (A) may be appropriately adjusted.

<Component (B): bisphenol-based resin>

(Component (b1): bisphenol-based compound)

The component (b1) is a compound having two hydroxyphenyl groups. Examples of the component (b1) include 2,2-bis(4-hydroxyphenyl)propane (hereinafter referred to as "bisphenol A"), bis(4-hydroxyphenyl)methane, 1,1-bis(4-hydroxyphenyl)ethane, 2,2-bis(4-hydroxyphenyl)hexafluoropropane, 1,1-bis(4-hydroxyphenyl)-1-phenylethane, 2,2-bis(4-hydroxyphenyl)butane, bis(4-hydroxyphenyl)diphenylmethane, 1,1-bis(4-hydroxyphenyl)cyclohexane, 1,1-bis(4-hydroxyphenyl)-3,3,5-trimethylcyclohexane, and bis(4-hydroxyphenyl)sulfone (hereinafter referred to as "bisphenol S"). The component (b1) can be used singly or in combinations of two or more. As for the component (b1), bisphenol A is preferable in view of the further excellent charge acceptability, and bisphenol S is preferable in view of the further excellent discharge characteristics.

As for the component (b1), it is preferable to use the bisphenol A and the bisphenol S together, in view of easily improving the cycle characteristics, the discharge characteristics and the charge acceptability in a well-balanced manner. In this case, the amount of the bisphenol A to be blended for obtaining the bisphenol-based resin (B) is preferably 70 mol% or more, more preferably 75 mol% or more, further preferably 80 mol% or more, and particularly preferably 90 mol% or more, based on the total amount of the bisphenol A and the bisphenol S, in view of easily improving the cycle characteristics, the discharge characteristics and the charge acceptability in a well-balanced manner. The amount of the bisphenol A to be blended is preferably 99 mol% or less, more preferably 98 mol% or less, and further preferably 97 mol% or less, based on the total amount of the bisphenol A and the bisphenol S, in view of easily improving the cycle characteristics, the discharge characteristics and the charge acceptability in a well-balanced manner.

(Component (b2): aminobenzenesulfonic acid and aminobenzenesulfonic acid derivative)

Examples of the aminobenzenesulfonic acids include 2-aminobenzenesulfonic acid (also known as orthanilic acid), 3-aminobenzenesulfonic acid (also known as metanilic acid), and 4-aminobenzenesulfonic acid (also known as sulfanilic acid).

Examples of the aminobenzenesulfonic acid derivatives include a compound formed by replacing part of a hydrogen atom of the aminobenzenesulfonic acid with an alkyl group (for example, alkyl group having 1 to 5 carbon atoms), and a compound formed by replacing a hydrogen atom of a sulfonic group ($-SO_3H$) of the aminobenzenesulfonic acid with an alkali metal (for example, sodium and potassium). Examples of the compounds formed by replacing part of hydrogen atoms of the aminobenzenesulfonic acid with an alkyl group include 4-(methylamino) benzenesulfonic acid, 3-methyl-4-aminobenzenesulfonic acid, 3-amino-4-methylbenzene sulfonic acid, 4-(ethylamino) benzenesulfonic acid, and 3-(ethylamino)-4-methylbenzene sulfonic acid. Examples of the compounds formed by replacing the hydrogen atom of the sulfonic group of the aminobenzenesulfonic acid with an alkali metal include sodium 2-aminobenzenesulfonate, sodium 3-aminobenzenesulfonate, sodium 4-aminobenzenesulfonate, potassium 2-aminobenzenesulfonate, potassium 3-aminobenzenesulfonate, and potassium 4-aminobenzenesulfonate.

The component (b2) can be used singly or in combinations of two or more. 4-Aminobenzenesulfonic acid is preferable as the component (b2), in view of further improving the cycle characteristics and the charge acceptability.

The amount of the component (b2) to be blended for obtaining the bisphenol-based resin (B) is preferably 0.5 mol or more, more preferably 0.6 mol or more, further preferably 0.8 mol or more, and particularly preferably 0.9 mol or more, with respect to 1 mol of the component (b1), in view of further improving the discharge characteristics. The amount of the component (b2) to be blended is preferably 1.3 mol or less, more preferably 1.2 mol or less, and further preferably 1.1 mol or less, with respect to 1 mol of the component (b1), in view of easiness to further improve the cycle characteristics and the discharge characteristics.

(Component (b3): formaldehyde and formaldehyde derivative)

Formaldehyde in formalin (for example, aqueous solution of 37 mass% of formaldehyde) may be used as formaldehyde.

Examples of the formaldehyde derivatives include paraformaldehyde, hexamethylenetetramine, and trioxane. The component (b3) can be used singly or in combinations of two or more. Formaldehyde and a formaldehyde derivative may be used together.

As the component (b3), formaldehyde derivatives are preferable, and paraformaldehyde is more preferable, in view of easiness to obtain the excellent cycle characteristics. The paraformaldehyde has, for example, the following structure:

$$HO(CH_2O)_{n1}H \ldots \qquad (I)$$

[In formula (I), n1 represents an integer of 2 to 100.]

The amount of the component (b3) to be blended in terms of formaldehyde for obtaining the bisphenol-based resin (B) is preferably 2 mols or more, more preferably 2.2 mols or more, further preferably 2.4 mols or more, particularly preferably 2.6 mols or more, and extremely preferably 2.8 mols or more, with respect to 1 mol of the component (b1), in view of improving the reactivity of the component (b2). The amount of the component (b3) to be blended in terms of formaldehyde is preferably 3.5 mols or less, more preferably 3.2 mols or less, and further preferably 3 mols or less, with respect to 1 mol of the component (b1), in view of the excellent solubility of the obtained bisphenol-based resin (B) to the solvent.

The bisphenol-based resin (B) preferably has, for example, at least one of a structural unit represented by the following general formula (II) and a structural unit represented by the following general formula (III).

[Chemical Formula 1]

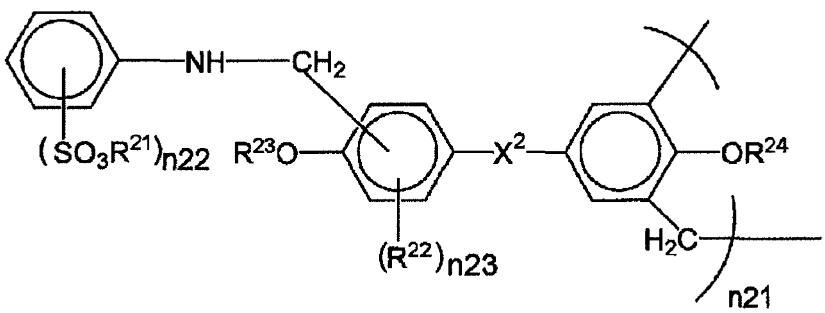

··· (II)

[In formula (II), $X^2$ represents a divalent group; $R^{21}$, $R^{23}$ and $R^{24}$ each independently represent an alkali metal or a hydrogen atom; $R^{22}$ represents a methylol group ($-CH_2OH$); n21 represents an integer of 1 to 150; n22 represents an integer of 1 to 3; n23 represents 0 or 1. Also, the hydrogen atom that is directly bonded to the carbon atom constituting the benzene ring may be substituted with an alkyl group having 1 to 5 carbon atoms.]

[Chemical Formula 2]

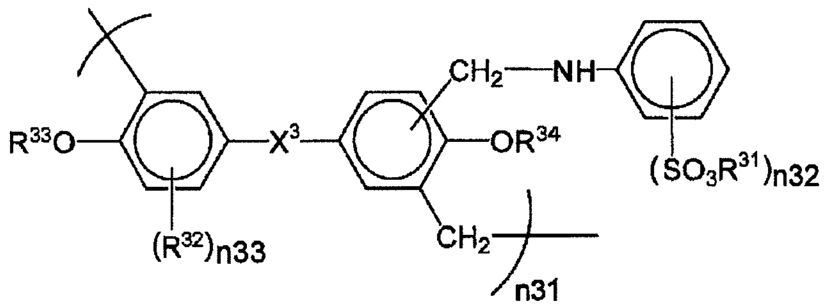

... (III)

[In formula (III), $X^3$ represents a divalent group; $R^{31}$, $R^{33}$ and $R^{34}$ each independently represent an alkali metal or a hydrogen atom; $R^{32}$ represents a methylol group ($-CH_2OH$); n31 represents an integer of 1 to 150; n32 represents an integer of 1 to 3; n33 represents 0 or 1. Also, the hydrogen atom that is directly bonded to the carbon atom constituting the benzene ring may be substituted with an alkyl group having 1 to 5 carbon atoms.]

A ratio between the structural unit represented by the formula (II) and the structural unit represented by the formula (III) is not limited in particular, and can vary depending on the synthetic condition or the like. A resin that has only either one of the structural unit represented by the formula (II) and the structural unit represented by the formula (III) may be used for the bisphenol-based resin (B).

Examples of the above described $X^2$ and $X^3$ include an organic group such as an alkylidene group (methylidene group, ethylidene group, isopropylidene group, sec-butylidene group, and the like), a cycloalkylidene group (cyclohexylidene group and the like), and a phenylalkylidene group (diphenylmethylidene group, phenylethylidene group and the like); and a sulfonyl group. As for the $X^2$ and $X^3$, the isopropylidene group ($-C(CH_3)_2-$) group is preferable in view of the further excellent charge acceptability, and the sulfonyl group ($-SO_2-$) is preferable in view of the further excellent discharge characteristics. The $X^2$ and $X^3$ may be substituted with a halogen atom such as a fluorine atom. When the $X^2$ and $X^3$ are the cycloalkylidene group, the hydrocarbon ring may be substituted with an alkyl group or the like.

Examples of alkali metals of $R^{21}$, $R^{23}$, $R^{24}$, $R^{31}$, $R^{33}$ and $R^{34}$ include sodium and potassium. n21 and n31 are preferably 1 to 150, and more preferably 10 to 150, in view of the further excellent cycle characteristics and the further excellent solubility to the solvent. n22 and n32 are preferably 1 or 2, and more preferably 1, in view of easily improving the cycle characteristics, the discharge characteristics and the charge acceptability in a well-balanced manner. n23 and n33 vary depending on the production condition, but n23 and n33 are preferably 0 in view of the further excellent cycle characteristics and the further excellent storage stability of the component (B).

The weight average molecular weight of the component (B) is preferably 20000 or more, more preferably 30000 or more, further preferably 40000 or more, particularly preferably 50000 or more, and extremely preferably 55000 or more and enormously preferably 60000 or more, in view of suppressing the elution of the component (B) from the electrode to an electrolytic solution in the lead storage battery to thereby easily improve the cycle characteristics. The weight average molecular weight of the component (B) is preferably 70000 or less, more preferably 65000 or less, and further preferably 62000 or less, in view of suppressing the lowering of adsorptivity of the component (B) to an electrode active material and the lowering of dispersibility to thereby easily improve the cycle characteristics.

The weight average molecular weight of the component (B) can be measured, for example, by gel permeation chromatography (hereinafter referred to as "GPC") on the following conditions.

(GPC condition)

Apparatus: High performance liquid chromatograph LC-2200 Plus (made by JASCO Corporation)
Pump: PU-2080
Differential refractometer: RI-2031
Detector: Ultraviolet visible absorptiometer UV-2075 ($\lambda$: 254 nm)
Column oven: CO-2065
Column: TSKgel SuperAW (4000), TSKgel SuperAW (3000) and TSKgel SuperAW (2500) (made by Tosoh Corporation)
Column temperature: 40°C
Eluent: Methanol solution containing LiBr (10 mM) and triethylamine (200 mM)
Flow velocity: 0.6 mL/minute

Molecular weight standard sample: polyethylene glycol (molecular weight: $1.10\times10^6$, $5.80\times10^5$, $2.55\times10^5$, $1.46\times10^5$, $1.01\times10^5$, $4.49\times10^4$, $2.70\times10^4$ and $2.10\times10^4$; made by Tosoh Corporation), diethylene glycol (molecular weight: $1.06\times10^2$; made by Kishida Chemical Co., Ltd.), and dibutylhydroxytoluene (molecular weight: $2.20\times10^2$; made by Kishida Chemical Co., Ltd.)

The production method for the bisphenol-based resin (B) comprises a resin production step of reacting the component (b1), the component (b2) and the component (b3) to obtain a bisphenol-based resin. The resin composition containing the bisphenol-based resin (B) may be a composition obtained in the resin production step, or alternatively it may be a composition obtained by mixing the bisphenol-based resin (B) and other components after the resin production step.

The resin composition containing the bisphenol-based resin (B) may further contain a solvent. Examples of the solvent include water (for example, ion exchange water), and an organic solvent. The solvent may be a reaction solvent which is used for obtaining the bisphenol-based resin (B).

The nonvolatile matter content in the resin composition containing the bisphenol-based resin (B) is preferably 10 mass% or more, more preferably 15 mass% or more, and further preferably 20 mass% or more, in view of the further excellent solubility of the bisphenol-based resin (B) and the further excellent battery characteristics. From the same viewpoint, the nonvolatile matter content in the resin composition containing the bisphenol-based resin (B) is preferably 50 mass% or less, more preferably 45 mass% or less, and further preferably 40 mass% or less.

The nonvolatile matter content can be measured, for example, by the following procedure. Firstly, a predetermined amount (for example, 2 g) of the resin composition is placed in a container (for example, metallic petri dish such as stainless steel petri dish), and then the resin composition is dried at 150°C for 60 minutes with the use of a hot-air drier. Next, after the temperature of the container has returned to room temperature (for example, 25°C), a residual mass is measured. The nonvolatile matter content is calculated from the following expression.

$$\text{Nonvolatile matter content (mass\%)} = [(\text{residual mass after drying})/(\text{mass of resin composition before drying})] \times 100$$

The bisphenol-based resin (B) can be obtained, for example, by reacting the component (b1), the component (b2) and the component (b3) in a reaction solvent. The reaction solvent is preferably water (for example, ion exchanged water). In order to promote the reaction, an organic solvent, a catalyst, an additive or the like may be used.

In view of further improving the cycle characteristics of a lead storage battery, in a preferable embodiment of the resin production step, the amount of the component (b2) to be blended is 0.5 to 1.3 mol with respect to 1 mol of the component (b1), and the amount of the component (b3) to be blended is 2 to 3.5 mol in terms of formaldehyde with respect to 1 mol of the component (b1). The preferable amount of each of the component (b2) and the component (b3) to be blended is in the range described above for each of the amounts of the component (b2) and the component (b3) to be blended.

It is preferable to obtain the bisphenol-based resin (B) by reacting the component (b1), the component (b2) and the component (b3) under the basic condition (alkaline condition), in view of easily obtaining a sufficient amount of the bisphenol-based resin (B). A basic compound may be used for the adjustment of the basic condition. Examples of the basic compounds include sodium hydroxide, potassium hydroxide, calcium hydroxide, magnesium hydroxide, and sodium carbonate. The basic compounds can be used singly or in combinations of two or more. Among the basic compounds, sodium hydroxide and potassium hydroxide are preferable, in view of excellent reactivity.

When the reaction solution at the time of reaction is neutral (pH = 7), there is a case where the production reaction of the bisphenol-based resin (B) does not easily progress, and when the reaction solution is acidic (pH<7), there is a case where a side reaction progresses. Because of this, the pH of the reaction solution at the time of reaction is preferably alkaline (over 7), more preferably 7.1 or higher, and further preferably 7.2 or higher, in view of suppressing the progress of the side reaction while progressing the production reaction of the bisphenol-based resin (B). The pH of the reaction solution is preferably 12 or lower, more preferably 10 or lower, and further preferably 9 or lower, in view of suppressing the progress of hydrolysis of a group derived from the component (b2) of the bisphenol-based resin (B). The pH of the reaction solution can be measured, for example, with a twin pH meter AS-212 made by Horiba, Ltd. The pH is defined as a pH at 25°C.

The amount of the strongly basic compound to be blended is preferably 1.01 mol or more, more preferably 1.02 mol or more, and further preferably 1.03 mol or more, with respect to 1 mol of the component (b2), because of easiness of the adjustment to the above described pH. From the same viewpoint, the amount of the strongly basic compound to be blended is preferably 1.1 mol or less, more preferably 1.08 mol or less, and further preferably 1.07 mol or less, with respect to 1 mol of the component (b2). Examples of the strongly basic compounds include sodium hydroxide and potassium hydroxide.

In the present embodiment, a reactant (reaction solution) obtained by a production method for the bisphenol-based resin (B) may be used as it is, for a production of an electrode described later, or the bisphenol-based resin (B) obtained by drying the reactant may be dissolved in a solvent (water or the like), and then used for the production of the electrode described later.

When the resin composition containing the bisphenol-based resin (B) (for example, liquid resin solution at 25°C) is used, the pH of the resin composition is preferably alkaline (over 7), and more preferably 7.1 or more, in view of the excellent solubility of the bisphenol-based resin (B) to the solvent (water or the like). The pH of the resin composition is preferably 10 or less, more preferably 9 or less, and further preferably 8.5 or less, in view of further improving the storage stability of the resin composition. In particular, when the composition obtained in the resin production step is used as the resin composition, the pH of the resin composition is preferably in the above described range. The pH of the resin composition can be measured, for example, with a twin pH meter AS-212 made by Horiba, Ltd. The pH is defined as a pH at 25°C.

In the synthetic reaction of the bisphenol-based resin (B), the component (b1), the component (b2) and the component (b3) can react to obtain the bisphenol-based resin, for example, the component (b1), the component (b2) and the component (b3) may be allowed to simultaneously react, alternatively, two components out of the component (b1), the component (b2) and the component (b3) may be allowed to react, followed by reacting the remaining one component.

It is preferable to carry out the synthetic reaction of the bisphenol-based resin (B) in the following two steps. In a reaction of the first step, for example, the component (b2), a solvent (water or the like) and a basic compound are placed and then stirred to substitute the hydrogen atom of the sulfonic group in the component (b2) with the alkali metal or the like, to obtain an alkali metal salt of the component (b2) or the like. Thereby, it is easy to suppress the side reaction in a condensation reaction described later. The temperature of the reaction system is preferably 0°C or higher, and more preferably 25°C or higher, in view of the excellent solubility of the component (b2) to the solvent (water or the like). The temperature of the reaction system is preferably 80°C or lower, more preferably 70°C or lower, and further preferably 65°C or lower, in view of suppressing the side reaction. The reaction time is, for example, 30 minutes.

In a reaction of the second step, for example, the component (b1) and the component (b3) are added to the reactant obtained in the first step, and a condensation reaction is carried out to obtain the bisphenol-based resin (B). The temperature of the reaction system is preferably 75°C or higher, more preferably 85°C or higher, and further preferably 87°C or higher, in view of the excellent reactivity of the component (b1), component (b2) and the component (b3). The temperature of the reaction system is preferably 100°C or lower, more preferably 95°C or lower, and further preferably 93°C or lower, in view of suppressing the side reaction. The reaction time is, for example, 5 to 20 hours.

<Component (C): naphthalenesulfonic acid-based resin>

The naphthalenesulfonic acid-based resin (C) is a resin having a structural unit derived from a naphthalenesulfonic acid-based compound. The naphthalenesulfonic acid-based resin (C) is, for example, a resin having a naphthylene structure containing a sulfonic group and/or a sulfonate group.

The naphthalenesulfonic acid-based resin (C) can be obtained by reacting a naphthalenesulfonic acid-based compound, and a compound which can be polymerized with the naphthalenesulfonic acid-based compound. The naphthalenesulfonic acid-based resin (C) can be obtained by reacting, for example, (c1) the naphthalenesulfonic acid-based compound, and (c2) at least one selected from the group consisting of formaldehyde and formaldehyde derivatives. The naphthalenesulfonic acid-based resin (C) preferably has a structural unit represented by the following formula (IV).

[Chemical Formula 3]

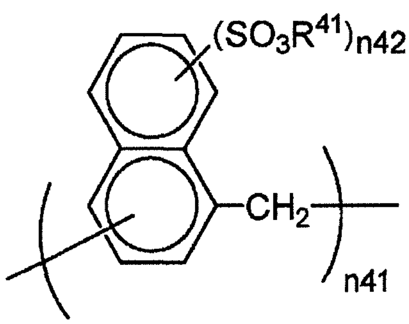

· · · (IV)

[In formula (IV), $R^{41}$ represents an alkali metal or a hydrogen atom; n41 represents an integer of 1 to 100; and n42

represents an integer of 1 to 3. In addition, a hydrogen atom that is bonded directly to the carbon atom constituting a benzene ring may be substituted with an alkyl group having 1 to 5 carbon atoms.]

Examples of the alkali metal of $R^{41}$ include sodium and potassium. When a plurality of $R^{41}$ exists, $R^{41}$ may be identical to or different from each other.

A commercially available resin can also be used as the naphthalenesulfonic acid-based resin (C). Examples of the commercially available naphthalenesulfonic acid-based resin include VANIOL HDL-100 (trade name, made by Nippon Paper Chemicals, Co., Ltd.), DEMOL N, DEMOL RN, DEMOL NL, DEMOL RNL, DEMOL T and DEMOL T-45 (which are trade names, and made by Kao Corporation).

(Component (c1): naphthalenesulfonic acid-based compound)

The naphthalenesulfonic acid-based compound (c1) is a compound having at least one selected from the group consisting of a naphthalenesulfonic group and a naphthalenesulfonate group. Examples of the component (c1) include at least one selected from the group consisting of naphthalenesulfonic acids and naphthalenesulphonate derivatives. Examples of the naphthalenesulfonic acids include 1-naphthalenesulfonic acid and 2-naphthalenesulfonic acid. Examples of the naphthalenesulphonate derivatives include a compound formed by replacing part of a hydrogen atom of the naphthalenesulfonic acid with an alkali metal (sodium, potassium or the like), and include sodium 1-naphthalenesulfonate, sodium 2-naphthalenesulfonate, potassium 1-naphthalenesulfonate and potassium 2-naphthalenesulfonate. The component (c1) can be used singly or in combinations of two or more.

(Component (c2): formaldehyde and formaldehyde derivative)

Examples of formaldehyde and the formaldehyde derivatives include the same substances as the above described component (b3).

The amount of the component (c2) to be blended for obtaining the naphthalenesulfonic acid-based resin (C) is, for example, approximately 1 to 2 mols with respect to 1 mol of the component (c1) in terms of formaldehyde. The naphthalenesulfonic acid-based resin (C) can be obtained by similar synthetic conditions to those for the above described bisphenol-based resin (B).

The weight average molecular weight of the component (C) is preferably 1000 or more, more preferably 3000 or more, further preferably 4000 or more, particularly preferably 5000 or more, extremely preferably 6000 or more, and enormously preferably 8000 or more, in view of easily improving the cycle characteristics of the lead storage battery. The weight average molecular weight of the component (C) is preferably 20000 or less, more preferably 15000 or less, and further preferably 10000 or less, in view of easily improving the cycle characteristics. The weight average molecular weight of the component (C) can be measured, for example, in a similar way to that for the weight average molecular weight of the bisphenol-based resin (B).

A ratio of the content of the component (C) with respect to the content of the component (B) (content ratio in terms of solid content: component (C) / component (B)) is preferably in the following range, in view of easily improving the cycle characteristics, the discharge characteristics and the charge acceptability in a well-balanced manner. The ratio between the contents is preferably 0.01 or more, more preferably 0.03 or more, and further preferably 0.05 or more. The ratio between the contents is preferably 0.5 or less, more preferably 0.4 or less, further preferably 0.35 or less, and particularly preferably 0.3 or less. The ratio between the contents is preferably 0.01 to 0.5, more preferably 0.03 to 0.4, further preferably 0.05 to 0.35, and particularly preferably 0.05 to 0.3.

<Lead storage battery and production method for the same>

The lead storage battery of the present embodiment comprises a positive electrode, a negative electrode, an electrolytic solution (sulfuric acid or the like), and a separator. Examples of the lead storage battery of the present embodiment include a liquid type lead storage battery, and a control valve type lead storage battery; and the liquid type lead storage battery is preferable. The production method for the lead storage battery comprises, for example, an electrode production step of obtaining the electrodes (positive electrode and negative electrode); and an assembling step of assembling constituent members including the electrodes to obtain the lead storage battery.

When the electrode is unformed, the electrode has, for example, an electrode material (electrode layer, active material layer) containing a raw material of the electrode active material and the like, and the current collector supporting the electrode material. The electrode after formation has, for example, the electrode material (electrode layer, active material layer) containing the electrode active material and the like, and a current collector supporting the electrode material. The lead storage battery of the present embodiment comprises the electrode after formation, for example, comprises a negative electrode having a negative electrode material containing the above described negative electrode active material (A).

In the electrode production step, for example, an unformed electrode (for example, polar plate) is obtained by filling the current collector (cast grid body, expanded grid body or the like) with the active material paste, and then performing aging and drying. The active material paste contains the above described bisphenol-based resin (B) and the above described naphthalenesulfonic acid-based resin (C) as a dispersing agent, and may further contain other additives or the like. When the electrode is the negative electrode, an unformed negative electrode active material consists of a basic lead sulfate, metal lead and a lower oxide.

It is preferable to appropriately blend the additive in the active material paste. Examples of the additive include barium sulfate, a carbon material, and a short fiber for reinforcement (acrylic fiber, polyethylene fiber, polypropylene fiber, polyethylene terephthalate fiber, carbon fiber and the like). Examples of the carbon material include carbon black and graphite. Examples of the carbon black include furnace black, channel black, acetylene black, thermal black and Ketchen black.

When the electrode is the negative electrode, a negative electrode active material paste can be obtained, for example, by the following method. Firstly, the additive is added to lead powder, and dry-mixing is performed to obtain a mixture. Next, a solvent (water or the like), and a resin composition containing the above described bisphenol-based resin (B) and the above described naphthalenesulfonic acid-based resin (C) are added to this mixture, and kneading is performed. Then, a negative electrode active material paste is obtained by adding a dilute sulfuric acid thereto and kneading. An unformed negative electrode plate is obtained by filling the current collector (cast grid body, expanded grid body or the like) with this negative electrode active material paste, and then performing aging and drying.

When the barium sulfate is used in the negative electrode active material paste, the amount of the barium sulfate to be blended is preferably 0.3 to 2.0 mass% based on the total mass of the raw material (lead powder and the like) of the negative electrode active material. The amount of the carbon material to be blended is preferably 0.05 to 1.9 mass% based on the total mass of the raw material (lead powder and the like) of the negative electrode active material. The amount of the bisphenol-based resin (B) to be blended is preferably 0.01 to 2.0 mass%, more preferably 0.05 to 1.0 mass%, and further preferably 0.1 to 0.3 mass%, in terms of the solid resin content, based on the total mass of the raw material (lead powder and the like) of the negative electrode active material. The amount of the naphthalenesulfonic acid-based resin (C) to be blended is preferably 0.01 to 2.0 mass%, more preferably 0.05 to 1.0 mass%, and further preferably 0.05 to 0.3 mass%, in terms of the solid resin content, based on the total mass of the raw material (lead powder and the like) of the negative electrode active material.

Examples of the material of the current collector include a lead-calcium-tin alloy, a lead-calcium alloy and a lead-antimony alloy. A small amount of selenium, silver, bismuth or the like can be added thereto.

The aging condition is preferably 15 to 30 hours in an atmosphere at a temperature of 45 to 65°C and a humidity of 70 to 98 RH%. The drying condition is preferably 15 to 30 hours at a temperature of 45 to 60°C.

When the electrode is the positive electrode, the positive electrode active material paste can be obtained, for example, by the following method. Firstly, the short fiber for reinforcement is added to the raw material (lead powder and the like) of the positive electrode active material, and then water and dilute sulfuric acid are added thereto. Kneading is performed for this to produce a positive electrode active material paste. When the positive electrode active material paste is produced, red lead ($Pb_3O_4$) may be added. An unformed positive electrode plate is obtained by filling the current collector (cast grid body, expanded grid body or the like) with this positive electrode active material paste, and then performing aging and drying. In the positive electrode active material paste, the amount of the short fiber for reinforcement to be blended is preferably 0.05 to 0.3 mass%, based on the total mass of the raw material (lead powder and the like) of the positive electrode active material. The type of the current collector, the aging condition and the drying condition are almost similar to those in the case of the negative electrode.

In the assembling step, for example, the unformed negative electrode and positive electrode that have been produced as described above are alternately layered via a separator, and current collecting portions of the electrodes that have the same polarity are connected (welded or the like) to each other with a strap, to thereby obtain a group of electrodes. This group of electrodes is arranged in a battery case to produce an unformed battery. Next, the dilute sulfuric acid is poured into the unformed battery, and then a direct current is passed to perform the formation in the battery case. The lead storage battery is obtained by adjusting the specific gravity (in terms of 20°C) of the sulfuric acid after formation to an appropriate specific gravity of the electrolyte. The specific gravity (in terms of 20°C) of the sulfuric acid to be used in the formation is preferably 1.20 to 1.25. The specific gravity (in terms of 20°C) of the sulfuric acid which has been adjusted after formation is preferably 1.26 to 1.30.

Examples of the separator include a microporous polyethylene sheet; and a non-woven fabric formed of a glass fiber and a synthetic resin. The conditions of the formation and the specific gravity of the sulfuric acid can be adjusted according to the properties of the electrode active material. In addition, the formation treatment is not limited to be performed after the assembling step, but may be performed after aging and drying in the electrode production step (tank formation).

**Example**

The present invention will be specifically described below with reference to examples. However, the present invention is not limited to only the following examples.

<Preparation of bisphenol-based resin (B) solution>

[Synthetic Example 1]

Each of the following components were placed in a reaction container having a stirring device, a refluxing device and a temperature adjustment device to obtain a first mixture liquid.

Sodium hydroxide: 1.05 mol [42.0 parts by mass]
Ion exchange water: 44.00 mol [792.6 parts by mass]
4-aminobenzenesulfonic acid: 1.00 mol [173.2 parts by mass]

The first mixture liquid was mixed and stirred at 25°C for 30 minutes. Subsequently, each of the following components was added to the first mixture liquid to obtain a second mixture liquid.

Bisphenol A: 0.96 mol [219.2 parts by mass]
Bisphenol S: 0.04 mol [10.4 parts by mass]
Paraformaldehyde (made by Mitsui Chemicals, Inc.): 3.00 mol [90.9 parts by mass] (in terms of formaldehyde)

A resin solution was obtained by reacting the second mixture liquid (pH = 8.6) at 90°C for 10 hours. The bisphenol-based resin contained in the resin solution obtained in Synthetic Example 1 was isolated by drying at a low temperature (60°C for 6 hours), and the $^1$H-NMR spectrum was measured. The measurement result of the $^1$H-NMR spectrum is shown in Figure 1.

[Synthetic Examples 2 to 4]

The resin solutions of Synthetic examples 2 to 4 were obtained by the same method as in Synthetic example 1, except that the constituent components of the resin solution were changed to components shown in Table 1. In Table 1, the amount of paraformaldehyde which was blended is the amount in terms of formaldehyde.

< Evaluation of resin solution and bisphenol-based resin>

[Measurement of nonvolatile matter content]

The nonvolatile matter content of the resin solution was measured by the following procedure. Firstly, 2 g of the resin solution was placed in a container (stainless steel petri dish) with 50 ϕ×15 mm, and then drying was performed at 150°C for 60 minutes with a hot air drier. Next, after the temperature of the container had returned to room temperature (25°C), a residual mass was measured to thereby measure the nonvolatile matter content. The results are shown in Table 1.

[Measurement of pH]

After the reaction had been completed, 500 mL of the resin solution was injected into a sensor portion of the following pH measurement device, and the pH of the resin solution was measured. The results are shown in Table 1.

(Condition of pH measurement)

pH measurement device: Twin pH meter AS-212 made by Horiba, Ltd.
Calibration liquid: pH calibration liquid made by Horiba, Ltd. (pH 4.01 and pH 6.86)
Measurement temperature: 25°C

[Measurement of weight average molecular weight]

The weight average molecular weight of the isolated bisphenol-based resin for $^1$H-NMR spectral measurement was measured with GPC on the following conditions. The results are shown in Table 1.

(GPC condition)

Apparatus: High performance liquid chromatograph LC-2200 Plus (made by JASCO Corporation)
Pump: PU-2080
Differential refractometer: RI-2031
Detector: Ultraviolet visible absorptiometer UV-2075 ($\lambda$: 254 nm)
Column oven: CO-2065
Column: TSKgel SuperAW (4000), TSKgel SuperAW (3000) and TSKgel SuperAW (2500) (made by Tosoh Corporation)
Column temperature: 40°C
Eluent: Methanol solution containing LiBr (10 mM) and triethylamine (200 mM)
Flow velocity: 0.6 mL/minute
Molecular weight standard sample: polyethylene glycol (molecular weight: $1.10\times10^6$, $5.80\times10^5$, $2.55\times10^5$, $1.46\times10^5$, $1.01\times10^5$, $4.49\times10^4$, $2.70\times10^4$ and $2.10\times10^4$; made by Tosoh Corporation), diethylene glycol (molecular weight: $1.06\times10^2$; made by Kishida Chemical Co., Ltd.), and dibutylhydroxytoluene (molecular weight: $2.20\times10^2$; made by Kishida Chemical Co., Ltd.)

The calibration curve calculated from the above described standard sample is shown in Figure 2. The abscissa shows a retention time, and the ordinate shows a logarithm of the molecular weight.

[Table 1]

| | | Synthetic example 1 | Synthetic example 2 | Synthetic example 3 | Synthetic example 4 |
|---|---|---|---|---|---|
| Bisphenol A | Parts by mass mol | 219.2 (0.96) | 228.3 (1.00) | 228.3 (1.00) | 219.2 (0.96) |
| Bisphenol S | Parts by mass mol | 10.4 (0.04) | - | - | 10.4 (0.04) |
| 4-aminobenzenesulfonic acid | Parts by mass mol | 173.2 (1.00) | 173.2 (1.00) | 138.6 (0.80) | 155.9 (0.90) |
| Paraformaldehyde | Parts by mass mol | 90.9 (3.00) | 90.9 (3.00) | 63.6 (2.70) | 77.3 (2.80) |
| Water | Parts by mass mol | 792.6 (44.00) | 792.6 (44.00) | 792.6 (44.00) | 792.6 (44.00) |
| Sodium hydroxide | Parts by mass mol | 42.0 (1.05) | 42.0 (1.05) | 33.6 (0.84) | 37.8 (0.95) |
| Nonvolatile matter content (%) | | 40 | 40 | 40 | 40 |
| pH | | 7.8 | 7.8 | 8.0 | 7.9 |
| Weight average molecular weight (Mw) | | 53900 | 58100 | 60300 | 57100 |

<Production of lead storage battery>

[Example 1]

(Production of negative electrode plate)

Based on the total mass of the lead powder having an average particle size of 1 μm, 0.3 mass% of the resin solution of Synthetic example 1 in terms of the solid content, 0.05 mass% of VANIOL HDL-100 (naphthalenesulfonic acid-based resin, trade name, made by Nippon Paper Chemicals Co., Ltd. and weight average molecular weight: 8000) in terms of the solid content, 0.2 mass% of furnace black and 1.0 mass% of barium sulfate were added to the lead powder, and then dry-mixing was performed. Next, kneading was performed while dilute sulfuric acid (specific gravity of 1.26 (in terms of 20°C)) and water were added, to thereby produce a negative electrode active material paste. An expanded current collector (lead-calcium-tin-based alloy) with a thickness of 1.0 mm was filled with the negative electrode active material paste to produce a negative electrode plate. The negative electrode plate was aged for 20 hours in an atmosphere at a temperature of 50°C and a humidity of 95%, and then drying was performed in an atmosphere at a temperature of 50°C to obtain an unformed negative electrode plate.

(Production of positive electrode plate)

Based on the total mass of the lead powder having an average particle size of 2 μm, 0.1 mass% of a short fiber for reinforcement (acrylic fiber) was added to the lead powder, and then dry-mixing was performed. Next, a dilute sulfuric acid (specific gravity of 1.28 (in terms of 20°C)) and water were added thereto, and kneading was performed to produce a positive electrode active material paste. A positive electrode current collector (lead-calcium-tin-based alloy) composed of an expanded grid body was filled with the positive electrode active material paste; and aging was performed for 20 hours in an atmosphere at a temperature of 50°C and a humidity of 95%, and then drying was performed in an atmosphere at a temperature of 50°C to obtain an unformed positive electrode plate.

(Assembly of battery)

Six unformed negative electrode plates and five unformed positive electrode plates were layered via a separator made from polyethylene so that the unformed negative electrode plates and the unformed positive electrode plates were alternately layered, and then the current collecting portions having the same polarity were welded to each other by a strap to produce a group of polar plates. The group of polar plates was inserted into a battery case to assemble a 2V single cell battery. Into this battery, a dilute sulfuric acid (specific gravity of 1.24 (in terms of 20°C)) was injected, and then formation was performed in a water bath at 40°C on the conditions of a passing current of 10.0 A and 15 hours. The specific surface area of the negative electrode material at the time after the formation (fully charged state) was 0.7 $m^2/g$. After the formation has ended, the dilute sulfuric acid was adjusted to a dilute sulfuric acid of 1.28 (in terms of 20°C), and therefore the lead storage battery in Example 1 was obtained.

The specific surface area of the negative electrode material was measured by a nitrogen gas BET flow method with the use of the specific surface area meter on the following condition. The specific surface area of the negative electrode material was determined by sampling approximately 0.2 g of the negative electrode material in the central part of the negative electrode plate, and using the BET specific surface area meter.

{BET specific surface area meter condition}
Apparatus: HM-2201FS (made by Macsorb Co., Ltd.)
Degassing time: 10 minutes at 130°C
Cooling: 4 minutes with liquid nitrogen
Adsorption gas flow rate: 25 mL/minute

[Examples 2 to 6 and Comparative Examples 1 and 3]

The lead storage batteries of Examples 2 to 6 and Comparative examples 1 and 3 were obtained by the same method as in Example 1, except that the constituent components of the negative electrode were changed to components shown in Table 2. The specific surface area of the negative electrode material at the time after the formation (fully charged state) was as shown in Table 2.

[Comparative Example 2]

The lead storage battery of Comparative Example 2 was obtained by the same method as in Example 1, except that the lead powder having an average particle size of 2 μm was used in the production of the negative electrode plate. The specific surface area of the negative electrode material at the time after the formation (fully charged state) was 0.4 $m^2/g$.

<Evaluation of battery characteristics>

The cycle characteristics, the discharge characteristics and the charge acceptability of the above described 2V single cell battery were measured in the following manner. The measurement results of the cycle characteristics, the discharge characteristics and the charge acceptability of Comparative Example 1 were each defined as 100, and each of the characteristics of the Examples and the Comparative examples was relatively evaluated. The results are shown in Table 2.

[Cycle characteristics]

The cycle characteristics were evaluated by a method according to light load life test (JIS D 5301) in Japanese Industrial Standard. As the number of cycles is larger, it is the battery having higher durability.

[Discharge characteristics]

As for the discharge characteristics, discharging was performed at a constant current of 5C at -15°C, and a discharge duration time was measured until the voltage of the battery has reached 1.0 V. As the discharge duration time is longer, it is evaluated as the battery having more excellent discharge characteristics. The above described C relatively represents a magnitude of an electric current at the time when a rated capacity is discharged at a constant current from the fully charged state. For example, an electric current which can discharge the rated capacity in 1 hour is represented by 1 C, and an electric current which can discharge the rated capacity in 2 hours is represented by 0.5 C.

[Charge acceptability]

As for the charge acceptability, in a state in which a state of charge (SOC) of the battery has become 90% (in other words, 10% of the battery capacity was discharged from a fully charged state and charging was performed at a constant voltage of 2.33 V), an electric current value was measured 5 seconds after the charging was started. As the electric current value after 5 seconds is larger, it is evaluated as the battery having more adequate charge acceptability.

[Table 2]

| Constitution of negative electrode | | Example 1 | Example 2 | Example 3 | Example 4 | Example 5 | Example 6 | Comparative example 1 | Comparative example 2 | Comparative example 3 |
|---|---|---|---|---|---|---|---|---|---|---|
| Bisphenol-based resin (mass%) | Synthetic example 1 | 0.3 | - | - | - | 0.3 | 0.3 | - | 0.3 | - |
| | Synthetic example 2 | - | 0.3 | - | - | - | - | 0.35 | - | - |
| | Synthetic example 3 | - | - | 0.3 | - | - | - | - | - | - |
| | Synthetic example 4 | - | - | - | 0.3 | - | - | - | - | - |
| Naphthalenesulfonic acid-based resin (mass%) | VANIOL HDL-100 | 0.05 | 0.05 | 0.05 | 0.05 | 0.10 | 0.02 | - | 0.05 | 0.35 |
| Content ratio (Naphthalenesulfonic acid-based resin/Bisphenol-based resin) | | 0.167 | 0.167 | 0.167 | 0.167 | 0.333 | 0.067 | 0 | 0.167 | - |
| Furnace black (mass%) | | 0.2 | 0.2 | 0.2 | 0.2 | 0.2 | 0.2 | 0.2 | 0.2 | 0.2 |
| Barium sulfate (mass%) | | 1.0 | 1.0 | 1.0 | 1.0 | 1.0 | 1.0 | 1.0 | 1.0 | 1.0 |
| Specific surface area of negative electrode material ($m^2/g$) | | 0.7 | 0.7 | 0.7 | 0.7 | 0.7 | 0.7 | 0.7 | 0.4 | 0.7 |
| Battery performance | Charge acceptability | 105 | 101 | 103 | 110 | 101 | 106 | 100 | 99 | 73 |
| | Discharge characteristics | 105 | 110 | 110 | 110 | 115 | 105 | 100 | 99 | 116 |
| | Cycle characteristics | 110 | 110 | 115 | 118 | 120 | 105 | 100 | 96 | 94 |

It can be confirmed that the cycle characteristics in the Examples are improved as compared with the Comparative examples. In addition, when Example 2 and Example 3 are compared to each other, it can be confirmed that the cycle characteristic of Example 3 having a larger weight average molecular weight of the bisphenol-based resin is improved. On the other hand, when Example 1 and Example 2 are compared to each other, the weight average molecular weight of the bisphenol-based resin of Example 2 is larger, but the cycle characteristics are equivalent. It can be considered from these results that Example 1 using the bisphenol-based resin synthesized with the use of the bisphenol A and the bisphenol S together can improve the cycle characteristics even without increasing the weight average molecular weight. Furthermore, in the Examples, it can be confirmed that the excellent cycle characteristics, discharge characteristics and charge acceptability are all provided.

## Industrial Applicability

According to the present invention, it is possible to provide a lead storage battery capable of obtaining the excellent cycle characteristics.

## Claims

**1.** A lead storage battery comprising a positive electrode and a negative electrode, wherein
the negative electrode has a current collector, and a negative electrode material supported by the current collector;
the negative electrode material comprises (A) a negative electrode active material, (B) a bisphenol-based resin having a structural unit derived from a reaction of (b1) a bisphenol-based compound, (b2) at least one selected from the group consisting of aminobenzenesulfonic acids and aminobenzenesulfonic acid derivatives, and (b3) at least one selected from the group consisting of formaldehyde and formaldehyde derivatives, and (C) a naphthalenesulfonic acid-based resin; and
a specific surface area of the negative electrode material is 0.5 $m^2/g$ or more in a fully charged state.

**2.** The lead storage battery according to claim 1, wherein a ratio of a content of the component (C) with respect to a content of the component (B) (component (C) / component (B)) is 0.01 to 0.5.

**3.** The lead storage battery according to claim 1 or 2, wherein a weight average molecular weight of the component (B) is 20000 to 70000.

**4.** The lead storage battery according to any one of claims 1 to 3, wherein a weight average molecular weight of the component (C) is 1000 to 20000.

Fig.1

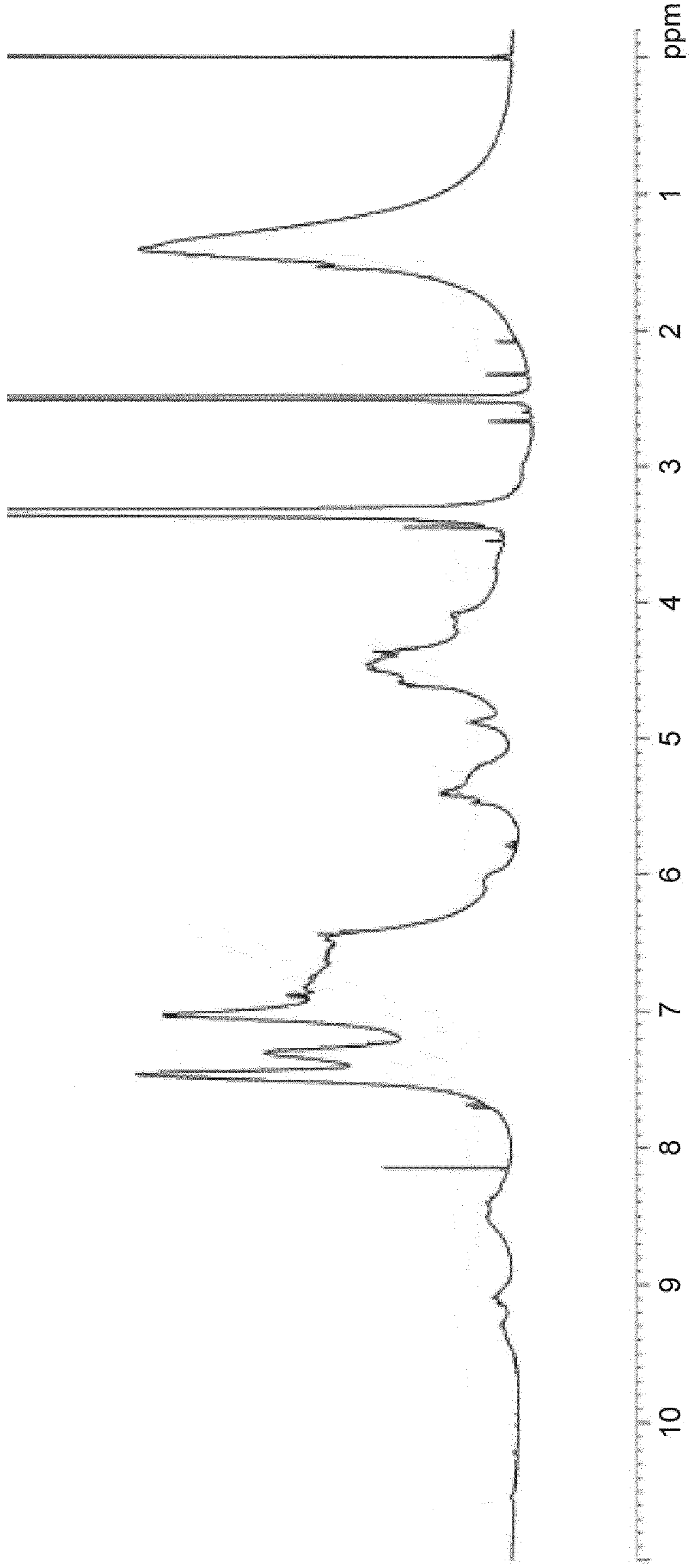

Fig.2

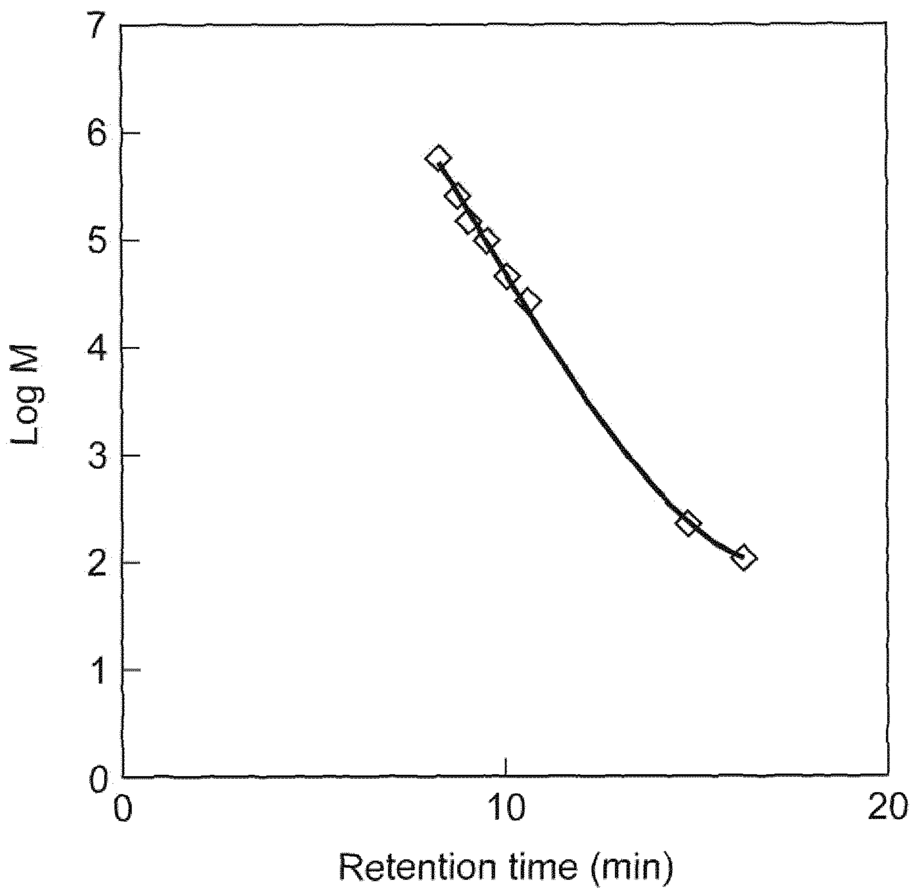

**INTERNATIONAL SEARCH REPORT**

International application No.
PCT/JP2015/073723

A. CLASSIFICATION OF SUBJECT MATTER
*H01M4/14*(2006.01)i, *H01M4/62*(2006.01)i

According to International Patent Classification (IPC) or to both national classification and IPC

B. FIELDS SEARCHED

Minimum documentation searched (classification system followed by classification symbols)
H01M4/14, H01M4/62

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2015 |
| Kokai Jitsuyo Shinan Koho | 1971-2015 | Toroku Jitsuyo Shinan Koho | 1994-2015 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | JP 2012-043594 A (Shin-Kobe Electric Machinery Co., Ltd.),<br>01 March 2012 (01.03.2012),<br>paragraphs [0010], [0012], [0016], [0020], [0023], [0035], [0041]<br>(Family: none) | 1-2,4<br>3 |
| Y | JP 2012-501519 A (Hammond Group, Inc.),<br>19 January 2012 (19.01.2012),<br>paragraphs [0002], [0005], [0011]<br>& US 2009/0325068 A1<br>paragraphs [0002], [0005], [0008]<br>& WO 2010/027451 A1 & KR 10-2011-0069775 A<br>& MX 2011002289 A & CN 102203985 A | 1-2,4 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 06 November 2015 (06.11.15) | 17 November 2015 (17.11.15) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (July 2009)

**INTERNATIONAL SEARCH REPORT**

International application No. PCT/JP2015/073723

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2006-294576 A (Shunzo MASE, Shin'ya KOZAWA), 26 October 2006 (26.10.2006), paragraphs [0003], [0005], [0009] (Family: none) | 1-2,4 |
| Y | JP 2013-211205 A (The Furukawa Battery Co., Ltd.), 10 October 2013 (10.10.2013), paragraphs [0004], [0007], [0008] (Family: none) | 1-2,4 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 199737393 A